# EUROPEAN PATENT SPECIFICATION

(11) **EP 2 594 854 B1**
(45) Date of publication and mention of the grant of the patent: **13.02.2019**
(21) Application number: 12382397.3
(22) Date of filing: 16.10.2012
(51) Int. Cl.: F24D 3/10, E03C 1/10

(54) **Valve unit adapted to connect a water supply network to a primary circuit**
Ventileinheit zur Verbindung eines Wasserversorgungsnetzwerks an einen Primärkreislauf
Unité de soupape conçue pour connecter un réseau d'alimentation en eau vers un circuit primaire

(30) Priority: 15.11.2011 ES 201131831
(43) Date of publication of application: 22.05.2013
(73) Proprietor: ORKLI, S. COOP., 20240 Ordizia (Gipuzkoa) (ES)
(72) Inventor: San Sebastian Etxebarria, Eñaut, 20150 Villabona (ES)
(74) Representative: Igartua, Ismael

(56) References cited:
- EP-A1- 1 830 009
- BE-A- 376 224
- GB-A- 499 150
- US-A- 2 667 747
- US-A- 4 013 088

## Description

### TECHNICAL FIELD

This invention relates to a valve unit adapted to connect a drinking-water supply network to a primary circuit, mainly a heating circuit.

### PRIOR ART

There are known valve units used to fill initially a primary circuit, mainly a heating circuit, with water, or when the primary circuit must be refilled due to losses in pressure, the purpose being to achieve the maximum efficiency of the heating circuit.

Given that in the primary circuit, the water that circulates through said circuit is in permanent contact with different heating elements and different substances that are used for the maintenance of said heating elements; the water circulating through the primary circuit is prevented from returning to the water distribution network. To prevent said recirculation, valve units comprise an opening/closure valve built into a water inlet conduit connected to the supply network, anti-return valves built into a water outlet conduit connected to the primary circuit, and a checking point arranged between the anti-return valves, which allows the installation engineer to check that the anti-return valves are operating correctly. The valve units also comprise connection/disconnection means that connect the inlet conduit to the outlet conduit in a connection position, and disconnect the inlet conduit from the outlet conduit in a disconnection position.

In GB2300695A, the connection/disconnection means comprise an open intermediate conduit that connects the inlet conduit to the outlet conduit, and a connector that is arranged housed in said intermediate conduit. The connector is detachable, in other words when it is housed in the intermediate conduit it enables the circulation of water between the inlet and outlet conduit, whereas when the installer removes the connector, the water that enters through the inlet conduit or that returns through the outlet conduit exits through the intermediate conduit towards the exterior. One problem associated with this valve unit is that there is, on the one hand, a risk of the connector being lost, as a result of which the valve unit would be unusable and, on the other, if the connector is not positioned correctly in the interior of the intermediate conduit, the pressure pushes said connector out, leading to the primary circuit not being filled at all or being filled ineffectively.

ES2145243T3 describes a valve unit that comprises a disconnector and couplings through which the disconnector is connected to the water inlet conduit and outlet conduit respectively. The body of each coupling also houses an opening/closure valve, with the result that it prevents the installer from using an opening/closure valve that does not comply with the installation requirements.

US4,013,088 discloses a valve structure comprising a body with an inlet, an outlet and a disconnector, and check valves located in the body, one to each side of the aperture. One of the check valves has a slidable housing whereas the other check valve has a fixed housing, being the slidable check valve biased away from the fixed housing by a spring.

In GB499,150 a faucet and particularly to the type wherein the valve functions to control the flow of liquid through the faucet is disclosed. The faucet comprise a fluid control valve and valve actuating means movable from a position in which the valve is closed, in two directions for opening said valve. The actuating means when moved in one direction automatically returns to the closed position but when moved in the second direction, remains stationary at any position to which it has been moved between fully open and closed positions.

In BE376224 a valve for purging boilers is disclosed. The valve comprises a body which includes an inlet conduit and an outlet conduit, and opening/closure means for the passage of water from the inlet conduit to the outlet conduit. Said opening/closure means are arranged in the body and comprises a rod operable by a pedal, a sealing member coupled to the rod that in normal operating conditions closes the passage of water. The rod is activated by the pedal opening the passage of water and when the user does not push the pedal, said rod returns to the closure position closing the passage of water.

EP1830009 A1 discloses a valve unit adapted to connect a water supply network to a primary circuit according to the preamble of claim 1.

### BRIEF DISCLOSURE OF THE INVENTION

The object of the invention is to provide a valve body adapted to connect a water supply network with a primary circuit, as defined in the claims.

The valve unit comprises a first body that comprises a conduit for the inlet of water from the supply network, a second body that comprises an outlet conduit adapted to conduct the inlet water to the primary circuit, a disconnection conduit adapted to disconnect the communication between the first body and the second body to prevent water from circulating from the primary circuit to the network, opening/closure means for the passage of water from the inlet conduit to the second body, and a connector by means of which the first body is arranged coupled to the second body, said connector comprising a base from which extends a threaded end for its coupling to one of the bodies and a coupling that is housed in the other body, the connector being fixed to said body by means of quick fixing means, the opening/closure means being arranged in a housing of the first body, the opening/closure means comprising a rod that comprises at one end a sealing member, the rod being movable when it is activated by a user.

The sealing member of the rod, in the normal operating conditions of the primary circuit, closes the passage of water from the first body to the second body. The opening/closure means comprise a support that is arranged inserted in one end of the housing of the first body, an actuator operable by the user and coupled to the rod, a spring member that acts on the rod, the spring member being arranged concentric to the rod, and retention means that comprise a flat surface of the actuator that cooperates with a flat surface of the support in a position that allows the passage of water from first body to the second body, locking the displacement of the rod. The actuator, by means of a rotation movement, moves the rod along the housing against the spring member compressing it, connecting the inlet conduit with the outlet conduit, the spring member moving the rod in order to close the passage of water from the first body to the second body when the user stops activating the rod or when the user unlocks retention means.

A valve unit that is optimised in terms of size and is easy and ergonomic for the user to operate is obtained.

These and other advantages and characteristics of the invention will be made evident in the light of the drawings and the detailed description thereof.

### DESCRIPTION OF THE DRAWINGS

Figure 1 shows a view in perspective of a first embodiment of a valve unit according to the invention.
Figure 2 shows another view in perspective of the valve unit shown in Figure 1.
Figure 3 shows a section view of the valve unit shown in Figure 1.
Figure 4 shows a view in perspective of a second embodiment of a valve unit according to the invention.
Figure 5 shows another view in perspective of the valve unit shown in Figure 4.
Figure 6 shows a section view of the valve unit shown in Figure 5 according to the VI-VI line.
Figure 7 shows an exploded view of opening/closure means comprised in the valve unit shown in Figure 4.
Figure 8 shows an exploded view of part of the opening/closure means comprised in the valve unit shown in Figure 4.
Figure 9 shows an exploded view of part of the opening/closure means comprised in the valve unit shown in Figure 4.

### DETAILED DISCLOSURE OF THE INVENTION

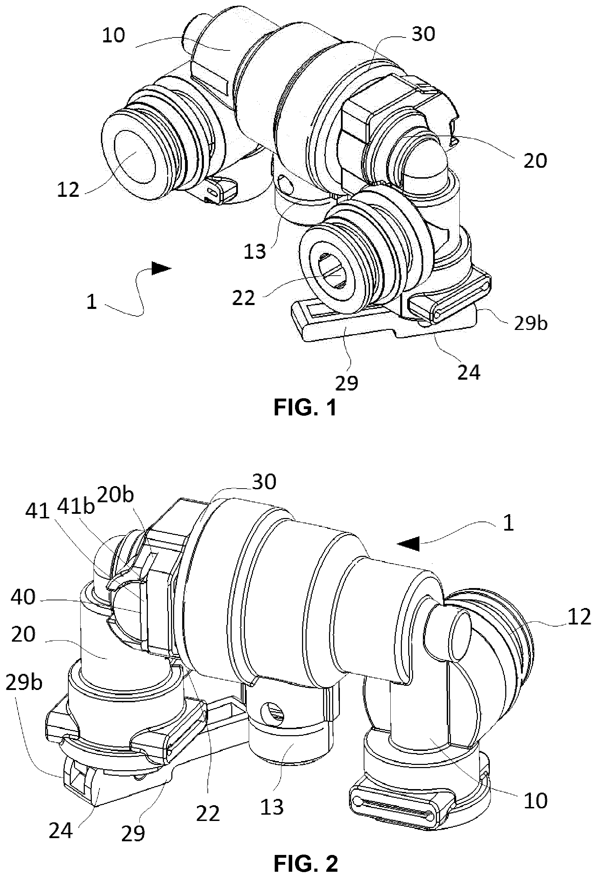

Figures 1 to 7 show a valve unit 1;1' adapted to connect a water supply network to a primary circuit, according to the invention, neither the primary circuit nor the water supply network being shown in the figures.

The valve unit 1;1' comprises a first body 20 that comprises a conduit 22 for the inlet of water from the supply network, a second body 10 that comprises an outlet conduit 12 adapted to conduct the inlet water to the primary circuit, in particular to a heating circuit, and a disconnection conduit 13 adapted to disconnect the communication between the first body 20 and the second body 10 to prevent the water of the primary circuit from returning to the network.

The first body 20 and the second body 10 are arranged coupled to each other by means of a connector 30. Said connector 30 enables the rapid and simple assembly of both bodies 10,20. As a result, a compact valve unit 1;1' is obtained, optimised in terms of the number of pieces to fit, and which allows the installation engineer to fit the valve unit 1;1' quickly and easily to the water network and the primary circuit for a specific distance between the axes of the network and primary conduits.

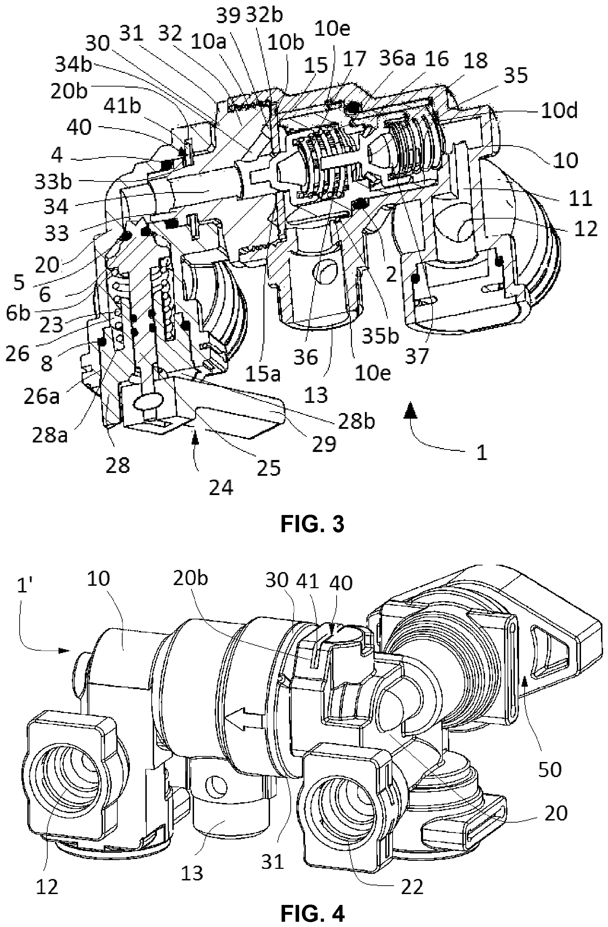

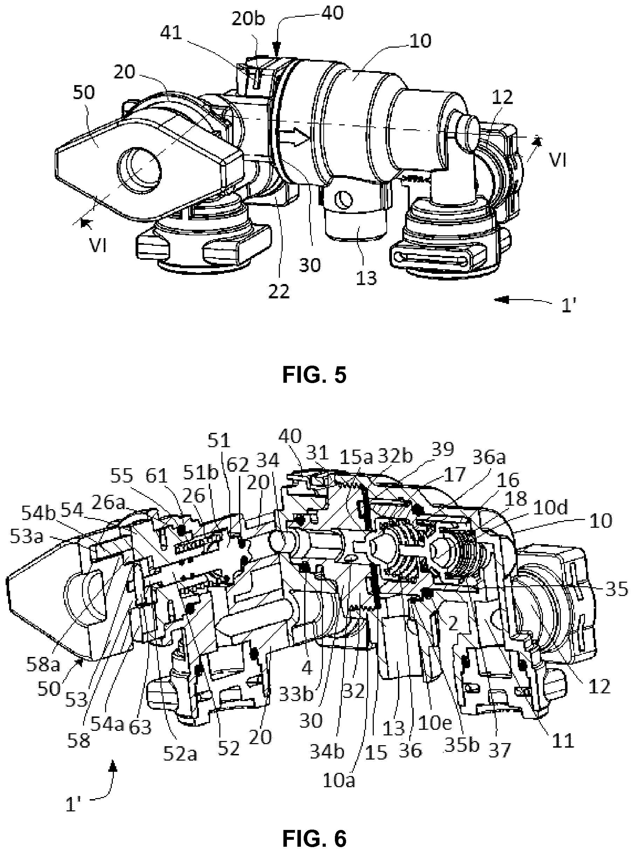

The connector 30, shown in detail in Figures 3 and 6, comprises a base 31 from which it extends in one direction, a threaded end 32 for its attachment to a threaded end 10a of the second body 10 and, in an opposite direction, a substantially cylindrical coupling 33 that is arranged housed in the first body 20. The connector 30 is arranged fixed to the first body 20 by means of quick fixing means 40. In addition, at the end of the coupling 33 is arranged a ring seal 4 for sealing the connection with the first body 20 in a sealed manner.

The quick fixing means 40 comprise an insert 41, shown in Figures 2 to 6, which has two arms 41b, shown in Figure 3, substantially parallel to each other and which are inserted through a radial groove 20b, shown in Figures 2 to 6, comprised in the first body 20, each arm 41b being housed in an annular recess 33b, shown in Figures 3 and 6, comprised in the coupling 33 and in the groove 20b of the first body 20.

In other embodiments not shown in the figures, other known quick fixing means may be used.

In addition, the disconnection conduit 13 is a substantially cylindrical conduit, built into the second body 10. Furthermore, the valve unit 1;1' comprises, in the embodiments shown, two anti-return valves 17,18 arranged in such a way that they prevent the return of water from the primary circuit through the outlet conduit 12 to the network, and a sealing member 15, housed in the second body 10.

The second body 10 comprises a substantially cylindrical main chamber 16, in whose interior is housed a support piece 35 of the anti-return valves 17,18. The anti-return valves 17,18 are known in the prior art, as a result of which their description is not considered necessary.

The support piece 35 is substantially cylindrical and hollow, and comprises a first housing 36 in which is housed the first anti-return valve 17 and a second housing 37 in which is housed the second anti-return valve 18. In addition, for the fixing of the support piece 35 to the second body 10, the support piece 35 comprises an annular projection 35b that is arranged inserted into an annular recess 10e comprised in the wall that delimits the main chamber 16. The support piece 35 comprises a ring seal 2 arranged on its exterior to seal the connection with the second body 10.

The main chamber 16 comprises at one end, a seating 10d for the second anti-return valve 18, while the support piece 35 comprises in the first housing 36 a seating 36a for the first anti-return valve 17. Furthermore, the sealing member 15 has a substantially circular shape and comprises a substantially concentric hole 15a. The hole 15a is partly passed through by the first anti-return valve 18.

On the other hand, the sealing member 15, shown in Figures 3 and 6, is arranged upstream from the disconnection conduit 13, supported on an inner annular rim 10b comprised on the threaded end 10a of the second body 10, the connector 30 closing against said sealing member 15. The connector 30 comprises an inner conduit 34 that passes through it longitudinally, being substantially concentric to the coupling 33. The connector 30 also comprises an annular gap 39 on the base 32b of the threaded end 32. The annular gap 39 is arranged substantially concentric to the inner conduit 34, being arranged connected to said inner conduit 34 by means of a connection conduit 34b. When the water circulates towards the primary conduit, part of the water that circulates through the inner conduit 34 bifurcates towards the connection conduit 34b, exiting through the annular gap 39 and pressing the sealing member 15 against the support piece 35 of the anti-return valves 17,18. As a result, the water that passes through the sealing member 15 through the hole 15a moves through the interior of the support piece 35 towards the outlet conduit 12 and not towards the disconnection conduit 13.

Additionally, the main chamber 16 is arranged substantially orthogonal to the disconnection conduit 13 and to the outlet conduit 12. In the embodiments shown in the figures, the outlet conduit 12 and the disconnection conduit 13 are arranged substantially orthogonal to each other. In other embodiments not shown in the figures, both the outlet conduit 12 and the disconnection conduit 13 may present other positions relative to each other.

In addition, the valve unit 1;1' comprises opening/closure means 24;50 for the passage of water from the inlet conduit 22 to the outlet conduit 12. These opening/closure means 24;50 are arranged in a housing 26 of the first body 20. The opening/closure means 24;50 enable the circulation of water from the inlet conduit 22 to the outlet conduit 12 through the inner conduit 34 comprised in the connector 30, and thereby allow the primary circuit to be filled whenever necessary.

The opening/closure means 24;50 comprise a rod 25;52 that includes at one end a sealing member 6;51 that in normal operating conditions of the primary circuit closes the passage of water of the first body 20 to the second body 10. The sealing member 6;51 comprises a ring seal 5;62 at one end, which closes the connection between the housing 26 of the first body 20 and the inner conduit 34 of the disconnector 33.

In the first embodiment, shown in Figures 1 to 3, the housing 26 of the first body 20 is arranged substantially orthogonal to the inlet conduit 20. In the second embodiment, shown in Figures 4 to 8, the housing 26 of the first body 20 is arranged substantially parallel to the inlet conduit 20. In other embodiments the housing 26 may be arranged in any relative position in relation to the inlet conduit 20.

The opening/closure means 24;50, shown in detail in Figures 3, 6 and 7, also comprise a support 28;54 that is arranged inserted in one end 26a of the housing 26 of the first body 20, the support 28;54 including a ring seal 8;61 arranged on its exterior, which seals the connection of the support 28;54 and the first body 20. Additionally, the opening/closure means 24;50 comprise a spring member 23;55 that acts on the rod 25;52, moving it in order to close the passage of water from the first body 20 to the second body when the user stops activating the corresponding rod 25;52. The spring member 23;55 is arranged substantially concentric to the rod 25;52 and to the support 28;54, the rod 25;52 passing through said support 28;54. One end of the spring member 23;54 is arranged supported on a base 28a;54a of a substantially ring-shaped housing comprised in the support 28;54, and the other end on a substantially flat, ring-shaped surface 6b;51b of the sealing member 6;51.

In the first embodiment of the valve unit 1, shown in Figures 1 to 3, the opening/closure means 24 comprise an actuator 29 that may be operated by the user and coupled at one end to the rod 25, with the result that the installer, when they have to refill the primary circuit with water, activates the actuator 29 by means of a movement of rotation in relation to an axis substantially orthogonal to the rod 25, which moves the rod 25 along the housing 26, against the spring member 23, compressing it, the inlet conduit 22 connecting with the outlet conduit 12. The actuator 29 is arranged substantially orthogonal to the rod 25 in the original position or the normal operating condition of the valve unit 1, as shown in Figures 1 to 3. Once the primary circuit has been refilled, or for safety purposes when the installer or user stops activating the actuator 29, the spring member 23 forces the rod 25 to return to its original position or the normal operating condition of the valve unit 1, closing the passage of water from the inlet conduit 22 to the outlet conduit 12.

In the embodiment shown, the opening/closure means 24 comprise retention means that, when the user has activated the actuator 29, lock the movement of the rod 25 in a position in which it allows the passage of water from the inlet conduit 22 to the outlet conduit 12, allowing the passage of water to the outlet conduit 12 to refill the primary circuit. The retention means comprise in the actuator 29 a substantially flat surface 29b that cooperates which a substantially flat surface 28b of the support 28 locking the displacement of the rod 25. The substantially flat surface 29b of the actuator 29 is arranged in contact with the substantially flat surface 28b of the support 28 when the user tilts the actuator 29 to an angle of approximately 90°, locking the displacement of the rod 25. In normal operating conditions of the primary circuit, the substantially flat surface 29a of the actuator 29 is arranged substantially parallel to the rod 25.

In other embodiments, for the purposes of safety, it is useful that when the user stops activating the actuator 29 the rod 25 returns to its original position, closing the passage of water. In this case, the opening/closure means 24 comprise a stopper, not shown in the figures, on the actuator 29, which prevents the tilting of the actuator 29 in relation to the upper rod 25 to approximately 45°. As a result, if the user releases the actuator 29, it returns to the initial position, preventing the passage of water.

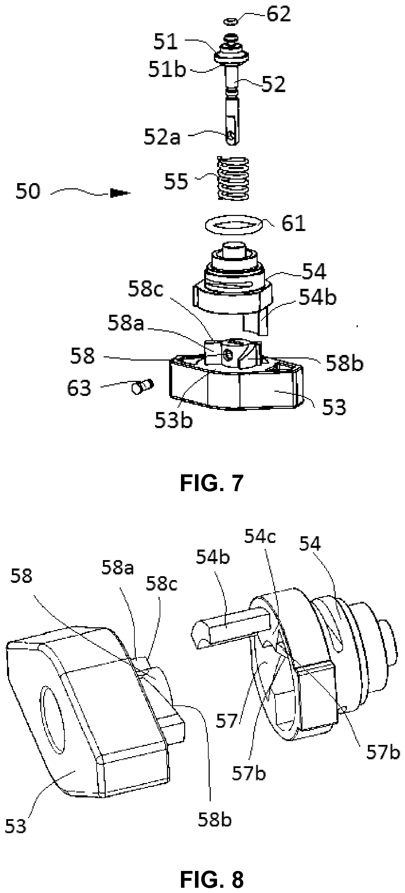

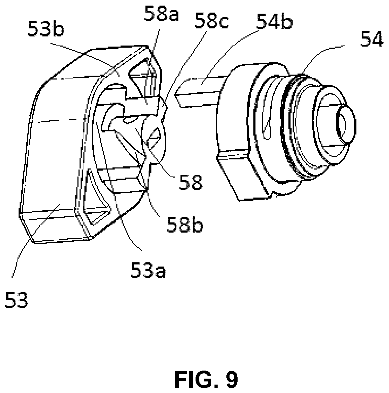

In addition, the fixing of the opening/closure means 24, in particular of the support 28 to the first body 20 is performed by quick fixing means similar to the quick fixing means 40 described for the fixing of the exchanger 30 to the first body 20, it being unnecessary to describe them once more. In other embodiments other quick fixing means may be used.
In the second embodiment of the valve unit 1' shown in Figures 5 to 9, the opening/closure means 50 comprise an actuator 53 that may be operated by the user and coupled to one end 52a of the rod 52. The actuator 53 is arranged coupled substantially coaxially to the rod 52, it being able to rotate in relation to a longitudinal axis of the rod 52. The actuator 53 comprises a substantially flat base 53b from which extends a projection 58 in which is arranged inserted the end 52a of the rod 52, the rod 52 being arranged fixed to the actuator 53 through a fixing member 63 that passes transversally through the end 52a of the rod 52 and the projection 58 of the actuator 53. The support 54 comprises a substantially concentric housing 57, shown in Figures 6 and 8, in which is housed the projection 58 of the actuator 53. The projection 58 and the housing 57, shown in Figure 8, comprise at least one corresponding guide surface 58b, 57b and are arranged substantially concentric to each other. The guide surfaces 58b, 57b collaborate with each other in the displacement of the actuator 53 and, therefore, of the rod 52 in relation to the support 54. In the second embodiment, shown in Figures 5 to 9, the projection 58 and the housing 57 respectively comprise two guide surfaces 58b,57b, the guide surfaces 58b,57b being helicoidal surfaces. The support 54 also comprises an extension 54b that extends substantially axially from a substantially flat surface 54c and which is arranged housed in a groove 53a arranged in the actuator 53. The groove 53a, shown in Figure 9, substantially describes an arch with a circumference substantially concentric to the projection 58, the groove 53a extending from the base 53b. As a result, when the installer has to refill the primary circuit with water, it activates the actuator 53 by means of a clockwise or anti-clockwise movement of rotation (depending on each case) in relation to the support 54, the movement of rotation being converted into a displacement of the rod 25 along the housing 26 of the first body 20, compressing the spring 55 thanks to the helicoidal displacement generated between the respective guide surfaces 57b,58b of the support 54 and the actuator 53, which are arranged in contact. As a result, the inlet conduit 22 is connected to the outlet conduit 12.
In the embodiment shown in Figures 5 to 9, the connection/disconnection means 50 comprise retention means adapted to lock the rod 52 in a position in relation to the first body 20, which allows the passage of water from the first body 20 to the second body 10. The retention means comprise stoppers 58a on the actuator 53, each one of which extends axially from the base 53b and continuous to the projection 58. The stoppers 58a are arranged diametrically in relation to the projection 58. Each stopper 58a comprises on the free end a substantially flat surface 58c that collaborates with the substantially flat surface 54c of the support 54 from which the extension 54b extends, with the result that when the user rotates the actuator 53, from the original position or the normal operating condition in which the passage of water to the outlet conduit 12 is closed, until both surfaces 58c,54c come into contact with each other, it locks the position of the actuator 53, allowing the passage of water from the inlet conduit 22 to the outlet conduit 12 without it being necessary for the installation engineer to keep the actuator 53 activated. In order to unlock it, the user must rotate the actuator 53 in the opposite direction, with the result that when both surfaces 58c,54c are not in contact the spring 55 forces the rod 52 to return to its original position or the normal operating condition of the valve unit 1', closing the passage of water from the inlet conduit 22 to the outlet conduit 12.

The fixing of the opening/closure means 50, in particular of the support 54 to the first body 20 is performed by quick fixing means similar to the quick fixing means 40 described for the fixing of the exchanger 30 to the first body 20, it being unnecessary to describe them once more. In other embodiments other quick fixing means may be used.

In addition, both in the first embodiment and in the second embodiment, the second body 20 also comprises a secondary chamber 11 that connects the inlet conduit 12 to the main chamber 16.

In the first embodiment, the opening/closure means 24 are arranged substantially parallel to the disconnection conduit 13. In the second embodiment, the opening/closure means 50 are arranged substantially orthogonal to the disconnection conduit 13 and substantially parallel to the water inlet conduit 12 and the water outlet conduit 22. In other embodiments not shown in the figures, the opening/closure means may be arranged in other relative positions in relation to the disconnection conduit 13, according to installation requirements.

The first body 20, the second body 10, and the connector 30 may be made of plastic, thus reducing weight and costs, metals or another type of material that fulfils the mechanical requirements. In a preferred embodiment at least the first body 20 is made of brass, with improved resistance to pressure being obtained, thereby preventing hammering.

## Claims

1. Valve unit adapted to connect a water supply network to a primary circuit, the valve unit comprising a first body (20) that includes a conduit (22) for the inlet of water from the supply network, a second body (10) that includes an outlet conduit (12) adapted to conduct the inlet water to the primary circuit, a disconnection conduit (13) adapted to disconnect the communication between the first body (20) and the second body (10), opening/closure means (24;50) for the passage of water from the inlet conduit (22) to the second body (10), and a connector (30) by means of which the first body (20) is arranged coupled to the second body (10), said connector (30) comprising a base (31) from which extends a threaded end (32) for its coupling to one of the bodies (10,20) and a coupling (33) that is housed in the other body (10,20), the connector (30) being fixed to said body (10,20) by means of quick fixing means (40), the opening/closure means (24;50) being arranged in a housing (26) of the first body (20), the opening/closure means (24;50) including a rod (25;52) that includes at one end a sealing member (6;51), and an actuator (29;53) operable by the user and coupled to the rod (25;52), **characterised in that** the sealing member (6; 51) of the rod (25; 52), in normal operating conditions of the primary circuit, closes the passage of water from the first body (20) to the second body (10), the opening/closure means (24;50) comprising a support (28;54) that is arranged inserted in one end (26a) of the housing (26) of the first body (20), a spring member (23;55) that acts on the rod (25;52), the spring member (23;55) being arranged concentric to the rod (25;52), and retention means that comprise a flat surface (29b;58c) of the actuator (29;53) that cooperates with a flat surface (28b;54c) of the support (28;54) in a position that allows the passage of water from the first body (20) to the second body (10), locking the displacement of the rod (25;52), wherein the actuator (29; 53), by means of a rotation movement, moves the rod (25;52) along the housing (26) against the spring member (23; 55) compressing it, connecting the inlet conduit (22) with the outlet conduit (12), the spring member (23; 55) moving the rod (25;52) in order to close the passage of water from the first body (20) to the second body (10) when the user stops activating the rod (25;52) or when the user unlocks the retention means.

2. Valve unit according to the preceding claim, wherein the connector (30) comprises an inner conduit (34) that passes through it longitudinally, said inner conduit (34) being substantially concentric to the coupling (33).

3. Valve unit according to the preceding claim, wherein the connector (30) comprises an annular gap (39) on a base (32b) of the threaded end (32), said annular gap (39) being arranged substantially concentric to the inner conduit (34) and connected to the inner conduit (34) by means of a connection conduit (34b), the valve unit comprising anti-return valves (17,18) arranged in such a way that they prevent the return of water from the primary circuit through the outlet conduit (12) to the network and a sealing member (15) housed in the second body (10), thus when the water circulates towards the primary conduit, part of the water that circulates through the inner conduit (34) bifurcates towards the connection conduit (34b), exiting through the annular gap (39) and pressing the sealing member (15) against a support piece (35) of the anti-return valves (17,18).

4. Valve unit according to any of the preceding claims, wherein the actuator (29) is rotatable in relation to an axis substantially orthogonal to the rod (25).

5. Valve unit according to the preceding claim, wherein the flat surfaces (28b, 29b) of the retention means cooperate with each other when the user tilts the actuator (29) to an angle greater than, approximately, 90°.

6. Valve unit according to claim 3, wherein the actuator (53) is arranged substantially coaxially to the rod (52), it being rotatable in relation to a longitudinal axis of the rod (52).

7. Valve unit according to the preceding claim, wherein the support (54) comprises a housing (57) that includes at least one guide surface (57b) and wherein the actuator (53) comprises a projection (58) that includes at least one guide surface (58b), both guide surfaces (57b,58b) collaborating in the movement of rod (52) in relation to the support (54).

8. Valve unit according to the preceding claim, wherein the guide surfaces (57b,58b) are helicoidal surfaces.

9. Valve unit according to claims 7 or 8, wherein the retention means comprise at least one stopper (58a) on the actuator (53) comprising the flat surface (54c) of the actuator (53), which extends continuously to the projection (58) and whose free end (58c) cooperates with the flat surface (54c) of the support (54) to lock the position of the actuator (53) in a position that allows the passage of water to the outlet conduit (12).

10. Valve unit according to claim 3, wherein the disconnection conduit (13) is built into the second body (10), at least one anti-return valve (17,18) being housed in a main chamber (16) of the second body (10).

11. Valve unit according to the preceding claim, wherein it comprises two anti-return valves (17,18) housed in the main chamber (16), the sealing member (15) including a hole (15a) that is partly passed through by one of the anti-return valves (17,18), the sealing member (15) being arranged upstream from the disconnection conduit (13).

12. Valve unit according to any of the preceding claims, wherein the first body (20) and/or the second body (10) are made of plastic and/or metal.

## Patentansprüche

1. Ventileinheit (1), die zum Verbinden eines Wasserversorgungsnetzwerks mit einem Primärkreislauf ausgelegt ist, wobei die Ventileinheit einen ersten Körper (20) umfasst, der eine Leitung (22) für den Einlass von Wasser von dem Versorgungsnetzwerk beinhaltet, einen zweiten Körper (10), der eine Auslassleitung (12) beinhaltet, die dafür ausgelegt ist, um das Einlasswasser zu dem Primärkreislauf zu leiten, eine Trennleitung (13), die dafür ausgelegt ist, die Verbindung zwischen dem ersten Körper (20) und dem zweiten Körper (10) zu trennen, eine Öffnungs-/Schließeinrichtung (24; 50) zum Durchgang von Wasser von der Einlassleitung (22) zu dem zweiten Körper (10), und einen Verbinder (30), mittels dessen der erste Körper (20) mit dem zweiten Körper (10) gekoppelt angeordnet ist, wobei der Verbinder (30) eine Basis (31) umfasst, von der sich ein Gewindeende (32) für seine Kopplung mit einem der Körper (10, 20) erstreckt, und eine Kupplung (33), die in dem anderen Körper (10, 20) untergebracht ist, wobei der Verbinder (30) mittels einer Schnellbefestigungseinrichtung (40) an dem Körper (10, 20) befestigt ist, wobei die Öffnungs-/Schließeinrichtung (24; 50) in einem Gehäuse (26) des ersten Körpers (20) angeordnet ist, wobei die Öffnungs-/Schließeinrichtung (24; 50) eine Stange (25; 52) beinhaltet, die an einem Ende ein Dichtungselement (6; 51) beinhaltet, und ein Stellglied (29; 53), das von dem Benutzer betätigt und mit der Stange (25; 52) gekoppelt werden kann, **dadurch gekennzeichnet, dass** das Dichtungselement (6; 51) der Stange (25; 52) unter normalen Betriebsbedingungen des Primärkreislaufs den Durchgang von Wasser von dem ersten Körper (20) zu dem zweiten Körper (10) schließt, wobei die Öffnungs-/Schließeinrichtung (24; 50) einen Träger (28; 54) umfasst, der in einem Ende (26a) des Gehäuses (26) des ersten Körpers (20) eingesetzt angeordnet ist, ein Federelement (23; 55), das auf die Stange (25; 52) wirkt, wobei das Federelement (23; 55) konzentrisch zu der Stange (25; 52) angeordnet ist, und Halteeinrichtungen, die eine ebene Fläche (29b; 58c) des Stellglieds (29; 53) umfassen, die mit einer ebenen Fläche (28b; 54c) des Trägers (28; 54) in einer Position zusammenwirkt, die den Durchgang von Wasser von dem ersten Körper (20) zu dem zweiten Körper (10) ermöglicht, wobei die Verlagerung der Stange (25; 52) arretiert ist, wobei das Stellglied (29; 53) mittels einer Drehbewegung die Stange (25; 52) entlang des Gehäuses (26) gegen das Federelement (23; 55) bewegt, wobei dieses zusammengedrückt wird, die Einlassleitung (22) mit der Auslassleitung (12) verbunden wird, wobei das Federelement (23; 55) die Stange (25; 52) bewegt, um den Durchgang von Wasser von dem ersten Körper (20) zu dem zweiten Körper (10) zu schließen, wenn der Benutzer die Aktivierung der Stange (25; 52) beendet oder wenn der Benutzer die Halteeinrichtungen entriegelt.

2. Ventileinheit nach dem vorhergehenden Anspruch, wobei der Verbinder (30) eine innere Leitung (34) umfasst, die in Längsrichtung durch ihn hindurchgeht, wobei die innere Leitung (34) im Wesentlichen konzentrisch zu der Kupplung (33) ist.

3. Ventileinheit nach dem vorhergehenden Anspruch, wobei der Verbinder (30) einen ringförmigen Spalt (39) auf einer Basis (32b) des Gewindeendes (32) umfasst, wobei der ringförmige Spalt (39) im Wesentlichen konzentrisch zu der inneren Leitung (34) angeordnet ist, und mit der inneren Leitung (34) mittels einer Verbindungsleitung (34b) verbunden ist, wobei die Ventileinheit Rückschlagventile (17, 18) umfasst, die derart angeordnet sind, dass sie die Rückführung von Wasser von dem Primärkreislauf durch die Auslassleitung (12) zu dem Netzwerk verhindern, und ein Dichtungselement (15), das in dem zweiten Körper (10) untergebracht ist, sodass dann, wenn das Wasser in Richtung der Primärleitung zirkuliert, ein Teil des Wassers, das durch die innere Leitung (34) zirkuliert, sich in Richtung der Verbindungsleitung (34b) verzweigt, durch den ringförmigen Spalt (39) austritt und das Dichtungselement (15) gegen ein Stützstück (35) der Rückschlagventile (17, 18) drückt.

4. Ventileinheit nach einem der vorhergehenden Ansprüche, wobei das Stellglied (29) in Bezug auf eine Achse drehbar ist, die im Wesentlichen orthogonal zu der Stange (25) ist.

5. Ventileinheit nach dem vorhergehenden Anspruch, wobei die ebenen Flächen (28b, 29b) der Halteeinrichtungen miteinander zusammenwirken, wenn der Benutzer das Stellglied (29) auf einen Winkel neigt, der größer als ungefähr 90° ist.

6. Ventileinheit nach Anspruch 3, wobei das Stellglied (53) im Wesentlichen koaxial zu der Stange (52) angeordnet ist, wobei es in Bezug auf eine Längsachse der Stange (52) drehbar ist.

7. Ventileinheit nach dem vorhergehenden Anspruch, wobei der Träger (54) ein Gehäuse (57) umfasst, das mindestens eine Führungsfläche (57b) beinhaltet, und wobei das Stellglied (53) einen Vorsprung (58) umfasst, der mindestens eine Führungsfläche (58b) beinhaltet, wobei beide Führungsflächen (57b, 58b) bei der Bewegung der Stange (52) in Bezug auf den Träger (54) zusammenwirken.

8. Ventileinheit nach dem vorhergehenden Anspruch, wobei die Führungsflächen (57b, 58b) schraubenförmige Flächen sind.

9. Ventileinheit nach den Ansprüchen 7 oder 8, wobei die Halteeinrichtungen mindestens einen Anschlag (58a) an dem Stellglied (53) umfassen, der die ebene Fläche (54c) des Stellglieds (53) umfasst, die sich kontinuierlich bis zu dem Vorsprung (58) erstreckt und deren freies Ende (58c) mit der ebenen Fläche (54c) des Trägers (54) zusammenwirkt, um die Position des Stellglieds (53) in einer Position zu arretieren, die den Durchgang von Wasser zu der Auslassleitung (12) ermöglicht.

10. Ventileinheit nach Anspruch 3, wobei die Trennleitung (13) in den zweiten Körper (10) eingebaut ist, wobei mindestens ein Rückschlagventil (17, 18) in einer Hauptkammer (16) des zweiten Körpers (10) untergebracht ist.

11. Ventileinheit nach dem vorhergehenden Anspruch, wobei sie zwei Rückschlagventile (17, 18) umfasst, die in der Hauptkammer (16) untergebracht sind, wobei das Dichtungselement (15) ein Loch (15a) beinhaltet, das teilweise von einem der Rückschlagventile (17, 18) durchquert wird, wobei das Dichtungselement (15) stromaufwärts der Trennleitung (13) angeordnet ist.

12. Ventileinheit nach einem der vorhergehenden Ansprüche, wobei der erste Körper (20) und/oder der zweite Körper (10) aus Kunststoff und/oder Metall bestehen.

## Revendications

1. Unité de soupape (1) conçue pour raccorder un réseau d'alimentation en eau à un circuit primaire, l'unité de soupape comprenant un premier corps (20) contenant un conduit (22) pour l'entrée d'eau du réseau d'alimentation, un second corps (10) qui comprend un conduit de sortie (12) conçu pour conduire l'eau d'entrée jusqu'au circuit primaire, un conduit de désaccouplement (13) conçu pour désaccoupler la communication entre le premier corps (20) et le second corps (10), des moyens d'ouverture/fermeture (24 ; 50) permettant le passage de l'eau du conduit d'entrée (22) jusqu'au second corps (10) et un connecteur (30) au moyen duquel le premier corps (20) est agencé accouplé au second corps (10), ledit connecteur (30) comprenant une base (31) à partir de laquelle s'étend une extrémité filetée (32) pour son accouplement à l'un des corps (10, 20) et à un raccord (33) logé dans l'autre corps (10, 20), le connecteur (30) étant fixé audit corps (10, 20) au moyen d'un moyen de fixation rapide (40), les moyens d'ouverture/fermeture (24 ; 50) étant agencés dans un boîtier (26) du premier corps (20), les moyens d'ouverture/fermeture (24 ; 50) comprenant une tige (25 ; 52) qui comprend, à une extrémité, un élément d'étanchéité (6 ; 51) et un actionneur (29 ; 53) pouvant être actionné par l'utilisateur et accouplé à la tige (25 ; 52), **caractérisée en ce que** l'élément d'étanchéité (6 ; 51) de la tige (25 ; 52) ferme, dans des conditions de fonctionnement normales du circuit primaire, le passage de l'eau du premier corps (20) au second corps (10), les moyens d'ouverture/fermeture (24 ; 50) comprenant un support (28 ; 54) qui est agencé inséré dans une extrémité (26a) du boîtier (26) du premier corps (20), un élément formant ressort (23 ; 55) agissant sur la tige (25 ; 52), l'élément formant ressort (23 ; 55) étant disposé de manière concentrique à la tige (25 ; 52), et des moyens de retenue comprenant une surface plane (29b ; 58c) de l'actionneur (29 ; 53) coopérant avec une surface plane (28b ; 54c) du support (28 ; 54) dans une position permettant le passage de l'eau du premier corps (20) au second corps (10), verrouillant le déplacement de la tige (25 ; 52), dans laquelle l'actionneur (29 ; 53), par un mouvement de rotation, déplace la tige (25 ; 52) le long du logement (26) contre l'élément formant ressort (23 ; 55), ce qui le comprime, reliant le conduit d'entrée (22) au conduit de sortie (12), l'élément formant ressort (23 ; 55) déplaçant la tige (25 ; 52) afin de fermer le passage de l'eau du premier corps (20) au second corps (10) lorsque l'utilisateur arrête d'activer la tige (25 ; 52) ou lorsque l'utilisateur déverrouille le moyen de retenue.

2. Unité de soupape selon la revendication précédente, dans laquelle le connecteur (30) comprend un conduit interne (34) qui le traverse longitudinalement, ledit conduit interne (34) étant sensiblement concentrique au raccord (33).

3. Unité de soupape selon la revendication précédente, dans laquelle le connecteur (30) comprend un espace annulaire (39) sur une base (32b) de l'extrémité filetée (32), ledit espace annulaire (39) étant agencé de manière sensiblement concentrique au conduit interne (34) et raccordé au conduit interne (34) au moyen d'un conduit de raccordement (34b), l'unité de soupape comprenant des clapets anti-retour (17, 18) agencés de manière à empêcher le retour d'eau du circuit primaire à travers le conduit de sortie (12) vers le réseau et un élément d'étanchéité (15) logé dans le second corps (10), ainsi, lorsque l'eau circule vers le conduit primaire, une partie de l'eau qui circule dans le conduit interne (34) bifurque en direction du conduit de raccordement (34b), en sortant par la fente annulaire (39) et en pressant l'élément d'étanchéité (15) contre une pièce de support (35) des clapets anti-retour (17, 18).

4. Unité de soupape selon l'une quelconque des revendications précédentes, dans laquelle l'actionneur (29) peut tourner par rapport à un axe sensiblement orthogonal à la tige (25).

5. Unité de soupape selon la revendication précédente, dans laquelle les surfaces planes (28b, 29b) des moyens de retenue coopèrent les unes avec les autres lorsque l'utilisateur incline l'actionneur (29) à un angle supérieur à environ 90°.

6. Unité de soupape selon la revendication 3, dans laquelle l'actionneur (53) est disposé de manière sensiblement coaxiale à la tige (52), pouvant tourner par rapport à un axe longitudinal de la tige (52).

7. Unité de soupape selon la revendication précédente, dans laquelle le support (54) comprend un logement (57) qui comprend au moins une surface de guidage (57b) et dans laquelle l'actionneur (53) comprend une saillie (58) qui comprend au moins une surface de guidage (58b), les deux surfaces de guidage (57b, 58b) collaborant dans le déplacement de la tige (52) par rapport au support (54).

8. Unité de soupape selon la revendication précédente, dans laquelle les surfaces de guidage (57b, 58b) sont des surfaces hélicoïdales.

9. Unité de soupape selon les revendications 7 ou 8, dans laquelle les moyens de retenue comprennent au moins un bouchon (58a) sur l'actionneur (53) comprenant la surface plane (54c) de l'actionneur (53) qui s'étend de manière continue jusqu'à la saillie (58) et dont l'extrémité libre (58c) coopère avec la surface plane (54c) du support (54) pour verrouiller la position de l'actionneur (53) dans une position permettant le passage de l'eau vers le conduit de sortie (12).

10. Unité de soupape selon la revendication 3, dans laquelle le conduit de déconnexion (13) est intégré dans le second corps (10), au moins un clapet anti-retour (17, 18) étant logé dans une chambre principale (16) du second corps (10).

11. Unité de soupape selon la revendication précédente, dans laquelle elle comprend deux clapets anti-retour (17, 18) logés dans la chambre principale (16), l'élément d'étanchéité (15) comprenant un trou (15a) traversé en partie par l'un des clapets anti-retour (17, 18), l'élément d'étanchéité (15) étant disposé en amont du conduit de déconnexion (13).

12. Unité de soupape selon l'une quelconque des revendications précédentes, dans laquelle le premier corps (20) et/ou le second corps (10) sont en matière plastique et/ou en métal.
